# EUROPEAN PATENT APPLICATION

(11) **EP 1 731 824 A2**
(43) Date of publication of application: **13.12.2006**
(21) Application number: 06115072.8
(22) Date of filing: 07.06.2006
(51) Int. Cl.: F16L 57/02

(54) **Method of Impeding Crack Propagation**

(30) Priority: 07.06.2005 US 688010 P
(71) Applicant: Mitsui Babcock Energy Limited, Renfrew PA4 8DJ (GB)
(72) Inventor: Brown, Bruce, Renfrew, PA4 0AD (GB)
(74) Representative: Murnane, Graham John

(57) **Abstract**

A method of impeding the propagation of a crack (16) in a structure (14) comprising: providing at least one compression member (40) at the structure (14) at a predetermined distance (50) from the crack (16) such that the structure (14) is in compression such that the stress at the crack (16) is reduced.

## Description

The present invention relates to a method of impeding crack propagation in a structure. In particular, but not exclusively, the invention relates to a method of impeding the propagation of radial cracks in a pipe.

Stress corrosion cracking (SCC) occurs in the presence of a stress and a corrosive environment which leads to the formation of a crack which would not have developed by the action of the stress or the environment alone. It can occur rapidly leading to catastrophic failure of structures, such as leaking in pipe-work. The stresses that cause SCC can result from the particular loading conditions on the structure or can be due to residual stresses introduced during manufacturing. Welding, cold deformation and forming, heat treatment, machining and grinding can all introduce residual stresses. The residual stresses introduced by welding operations can approach the yield strength of the material.

SCC is a mechanism that requires the pairing of a particular material with a particular environment, and the application of a tensile stress above a critical value. Well-known material/environment pairs are stainless steel and chlorides, and high strength steels and hydrogen.

With SCC, micro-cracks penetrate into the material, typically in a radial direction within pipe-work. The detection of such fine cracks can be difficult and can be made harder when using conventional prevention or repair methods. For example, cracks can form at the butt weld joint of two adjacent pipes, and it is common to strengthen or repair the joint by welding a band of material around the joint. However, this can make the ultrasonic detection of further cracking more difficult due to the additional material at the joint which must be penetrated during ultrasonic detection.

According to the present invention, there is provided a method of impeding the propagation of a crack in a structure comprising:
providing at least one compression member at the structure at a predetermined distance from the crack such that the structure is in compression such that the stress at the crack is reduced.

The crack may be propagating due to stress corrosion cracking or due to another reason.

Preferably the structure is a pipe. Preferably the pipe is connected to another pipe at a joint. Preferably the joint is a welded joint. Preferably the joint is a butt-welded joint. Alternatively, the structure may be a connector, flange, tee piece, plate or nozzle.

Preferably the compression member is provided at the pipe at a distance from the crack in the axial direction. Preferably the pipe is in radial compression at the compression member.

Preferably the stress at the crack which is reduced is an axial tensile stress. Preferably the crack is a radial crack. Preferably the crack is located at the internal surface of the pipe and the compression member produces a reduced axial tensile stress or an axial compressive stress at this location.

Preferably the method comprises attaching two compression members to the structure. Preferably one compression member is attached to the structure at each side of the crack. Preferably one compression member is attached to the pipe at each side of the crack in an axial direction.

Preferably the compression member comprises a band of material. Preferably the band of material comprises a weld material deposited on the structure such that the structure is compressed as the band cools. Alternatively, the method may include clamping a clamping device to the structure. Alternatively, the method may include providing the compression member using induction heating.

Preferably the predetermined distance is dependent upon one or more of the factors of the material of the structure, the thickness of the structure and the width of the compression member. Preferably the predetermined distance is determined by performing a stress analysis of the structure. Preferably the stress analysis is performed using a computer simulation of the structure. Preferably the computer simulation involved the use of Finite Element Analysis. Alternatively, the stress analysis is performed using empirical testing. Alternatively, the stress analysis is performed using mathematical modelling.

An embodiment of the present invention will now be described, by way of example only, with reference to the accompanying drawings, in which:
Fig. 1 is a longitudinal sectional view of a portion of the butt-welded joint of two pipes;
Fig. 2 is a longitudinal sectional view of a butt-welded joint reinforced using an overlay according to a prior art method;
Fig. 3 is a simulation of the axial stress distribution of a portion of the pipes and joint of Fig. 1 without any overlay applied;
Fig. 4 is a longitudinal sectional view of the pipes and joint of Fig. 1 with compression members attached according to the present invention;
Fig. 5 is a simulation of the axial stress distribution of a portion of the pipes and joint of Fig. 4;
Fig. 6 is graph of axial stress against distance for the pipes and joint of Fig. 4;
Fig. 7 is simulation of the stress distribution for pipes and a joint Fig. 1 using a single compression member according to the present invention;
Fig. 8 is a graph of axial stress against distance for the pipes and joint of Fig. 7;
Fig. 9 is a simulation of the axial stress distribution for the pipes and joint of Fig. 4 and including a crack; and
Fig. 10 is a simulation of the stress distribution for the pipes and joint of Fig. 4 during welding in accordance with the present method.

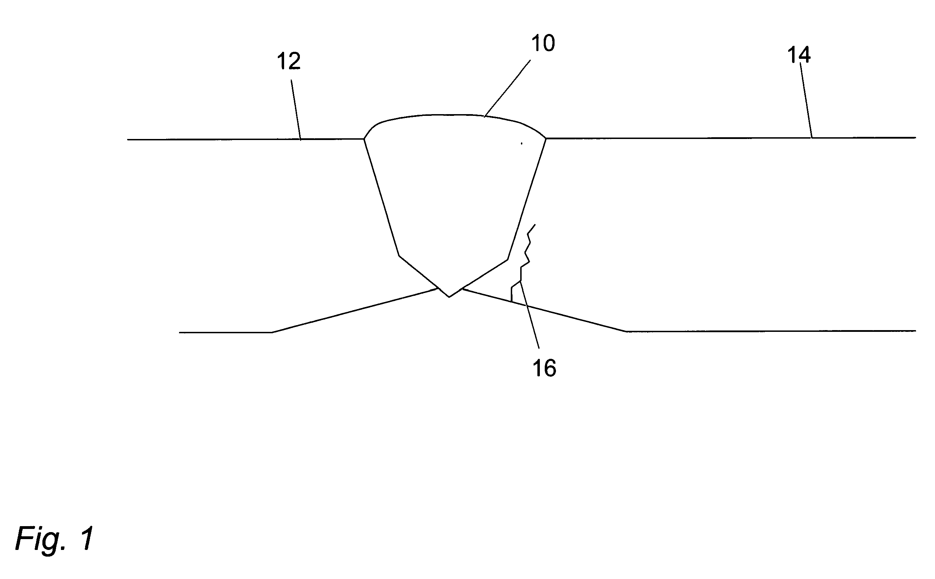

Fig. 1 is a sectional view of a butt weld 10 joining the ends of two pipes 12, 14. Only the top portion (the portion of the pipes and weld above the longitudinal axis of the pipes) is shown in Fig. 1. A crack 16 is present which extends generally in a radial direction from the internal surface of one of the pipes 14. The crack 16 may have been produced by the process of welding or by some other factor such as SCC or post weld treatment.

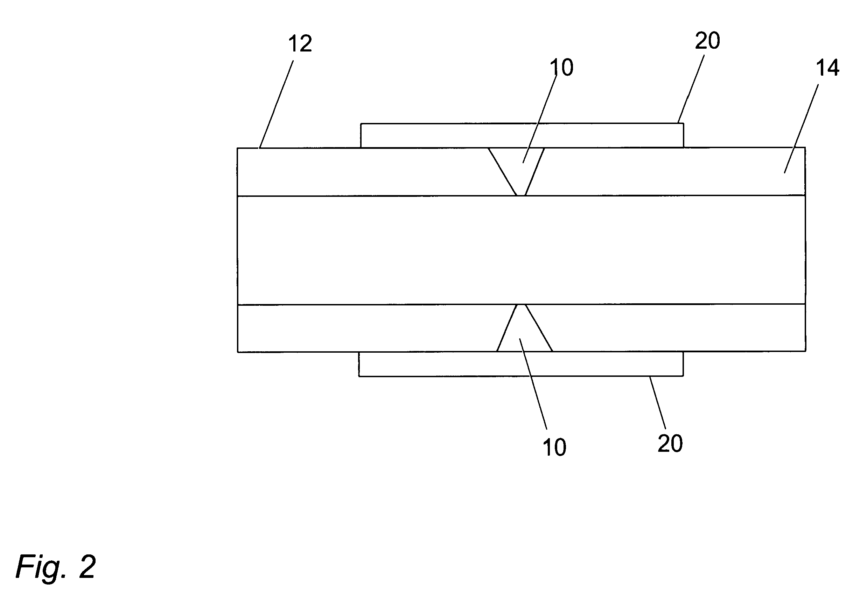

Fig. 2 shows a prior art method of strengthening or repairing the joint 10. A band of material 20 is welded over the joint 10. However, this makes the inspection of the joint more difficult.

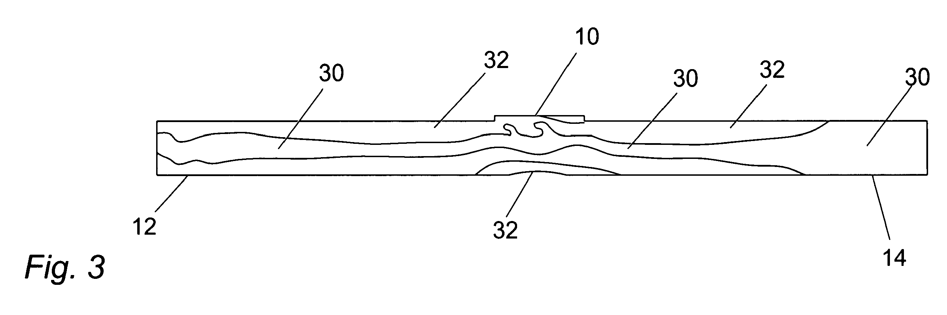

Fig. 3 is a simulation using finite element analysis (FEA) of the axial stress distribution in the pipe and joint before the overlay is applied. Many regions 30 of the pipe are in a condition of substantially zero stress. However, a number of regions 32 are subject to a tensile axial stress, and these regions 32 include the location of the butt weld at the internal surface of the pipes 12, 14. This tensile stress represents an opening force on any radial cracks that are present and so tends to increase the rate of propagation of the cracks.

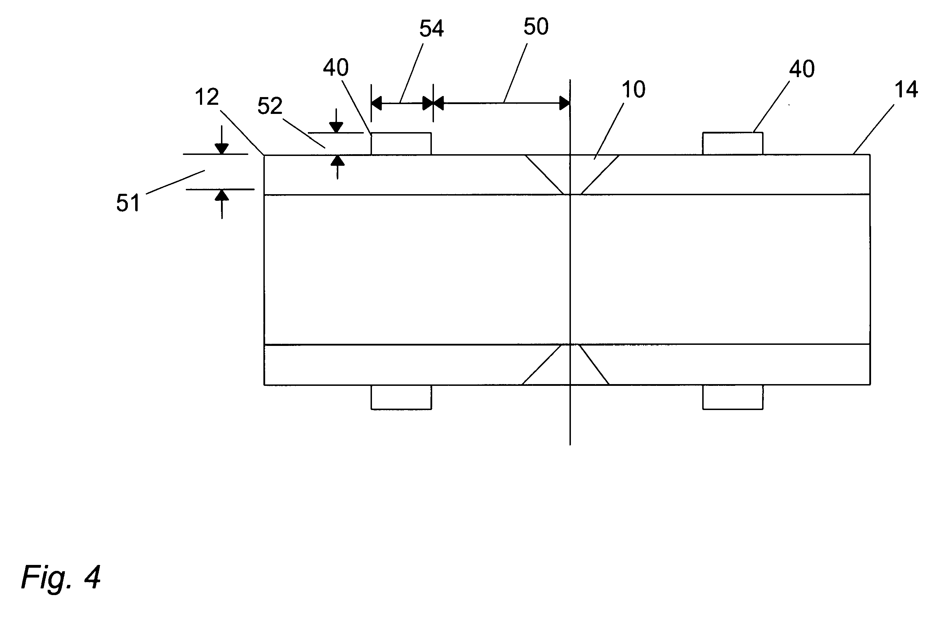

Fig. 4 shows a method of impeding the propagation of cracks according to the present invention. A compression member 40 in the form of a band of weld material is formed at each pipe 12, 14 at a predetermined distance 50 from the joint 10 and therefore the crack 16. Each compression member 40 is formed by welding a band of material to the respective pipe. As the material cools, the material contracts so that each pipe 12, 14 is compressed at the location of the compression member 40.

It has been found that if the compression member is attached at a suitable distance from the crack then the axial tensile stress at the crack is reduced. The axial tensile stress at the outer surface of the joint will be increased since the material has effectively been stretched in the axial direction by radial compression of the pipes caused by the compression members. However, the axial tensile stress will be reduced at the internal surface, which is the location of the crack since the material has effectively been compressed in the axial direction by the same radial compression of the pipes caused by the compression members.

The suitable distance for locating each compression member is dependent upon a number of factors, such as the thickness 51 and material used for the pipe, and the thickness 52 and width 54 of the compression member 40.

The suitable distance can be determined using a stress analysis performed using a computer simulation, such as FEA, of the pipe, compression member and loading conditions. However, the stress analysis can be performed using other techniques such as empirical testing or mathematical modelling. Empirical testing may involve applying a temporary compression member, such as a releasable clamp, to the pipe. The axial stress can be calculated in a number of ways, such as by measuring the axial strain at the joint using strain gauges and then converting the measured strain to the axial stress. Through trial and error, the optimum position of the compression member can be determined.

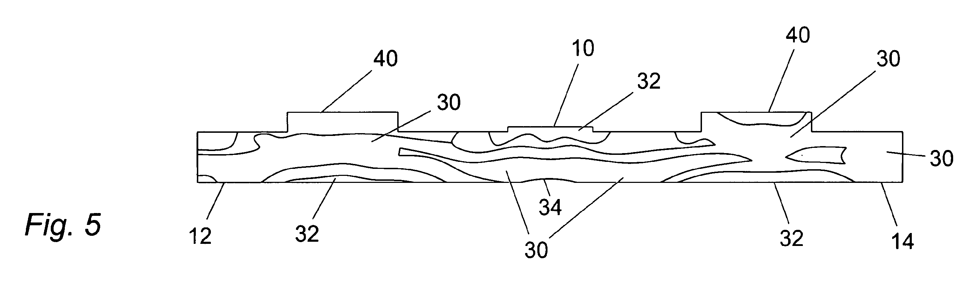

Fig. 5 shows the axial stress distribution in the pipes 12, 14 and the joint 10 when the compression members 40 have been attached. Once again, the pipes and joint include regions 30 of substantially zero axial stress and regions 32 of tensile axial stress. However, these regions of tensile stress are localised at the internal surface of the pipes 12, 14 at the compression members 40 and at the outer surface of the joint 10. The joint 10 at the internal surface of the pipes is a region of compressive stress 34. This compressive stress represents a closing force to any cracks which may be present and so tends to impede the propagation of cracks.

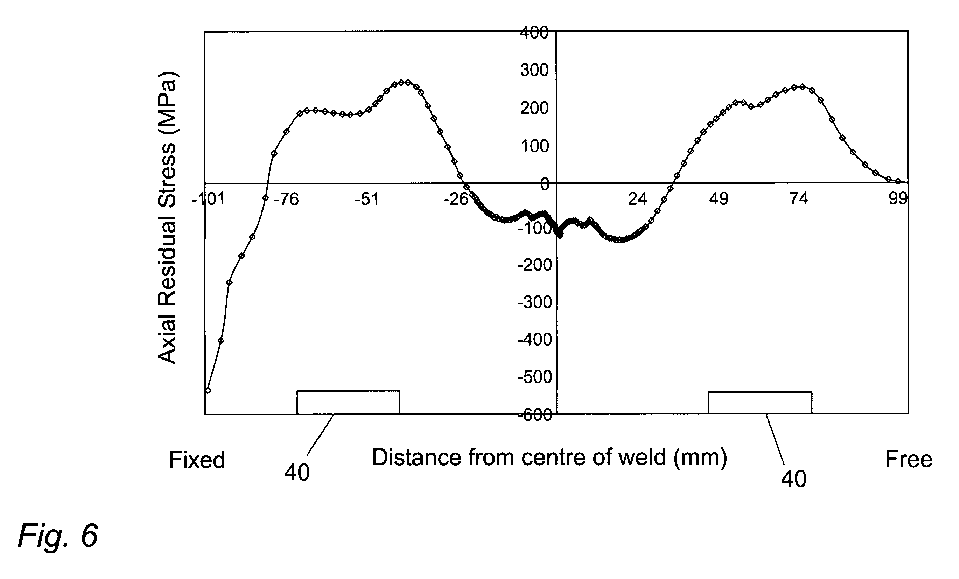

Fig. 6 shows a graph of axial stress plotted with respect to distance along the pipes 12, 14. The result confirms that the axial stress is compressive in the region of the joint 10.

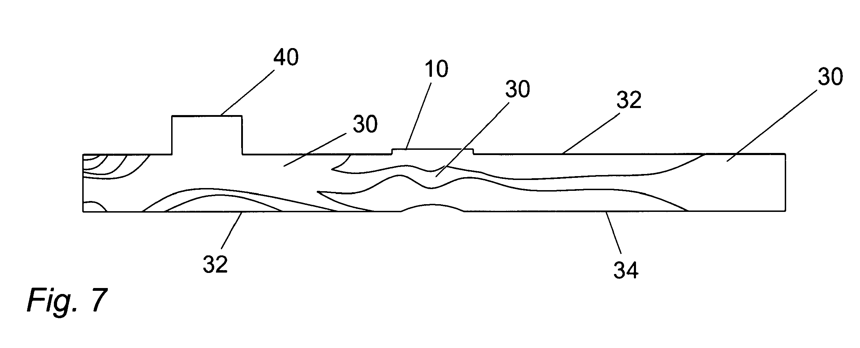

Fig. 7 shows a simulation of the axial stress when only one compression member 40 is used. Regions of substantially zero stress 30, tensile stress 32 and compressive stress 34 are shown.

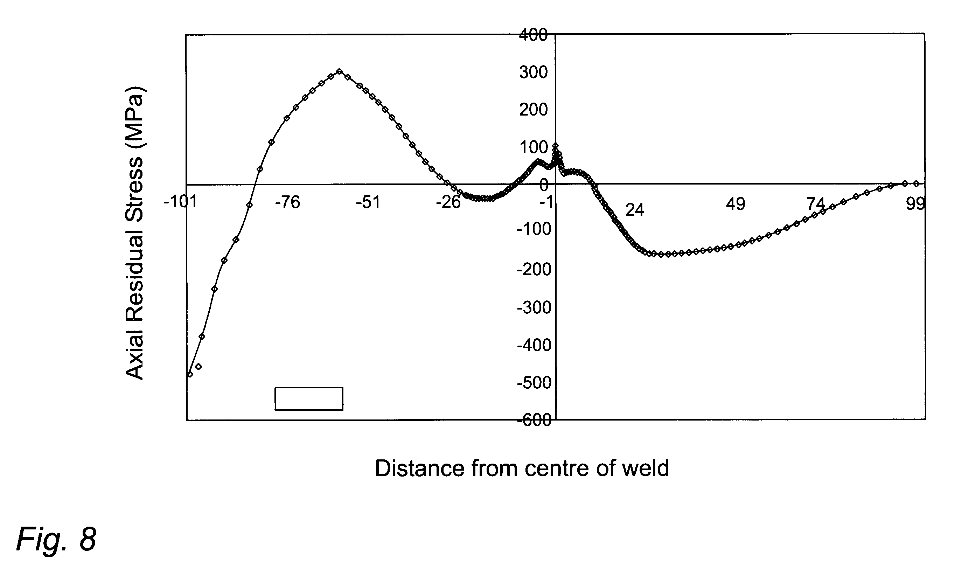

Fig. 8 shows a graph of the axial stress with respect to the distance along the pipes. This shows that even the use of a single compression member 40 can reduce the axial tensile stress at the location of the joint 10 (at the internal surface of the pipe). This reduction may be to below the critical value of axial tensile stress required for stress corrosion cracking. Indeed, repositioning of the single compression member 40, such as further to the left in Fig. 7, may produce a region of zero or compressive stress at the joint 10.

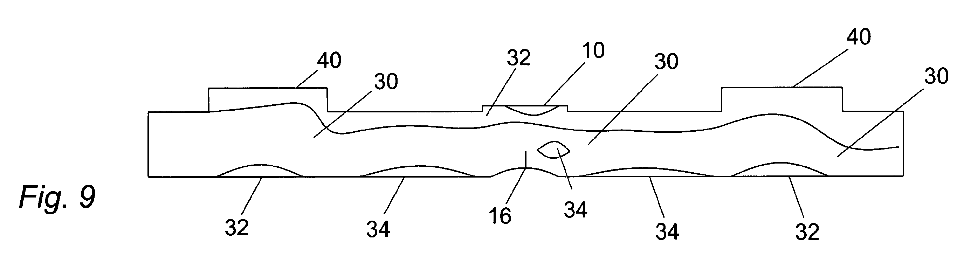

Fig. 9 is a simulation of the method using two compression members 40 and includes a simulated crack 16. Regions of substantially zero stress 30, tensile stress 32 and compressive stress 34 are shown. The region at the crack tip is in a state of axial compression 34.

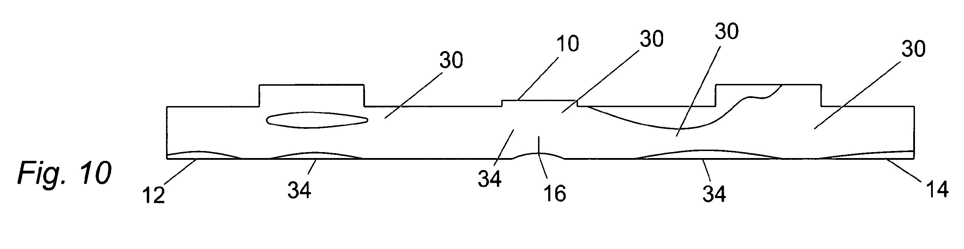

Fig. 10 shows a simulation of the axial stress during welding and again includes the crack 16. At this stage, most regions 30 of the pipes 12, 14 and joint 10 are in a state of substantially zero stress. However, some regions 34, in particular the region around the crack tip, are in a state of relatively low compressive stress. Compressive stress in the region around the crack tip is induced during the welding process. Therefore, the present method will not cause damage to the structure during its application.

It is therefore clear that the present invention serves to reduce the axial tensile stress at a crack 16 which is present at or near the joint 10 between two pipes 12, 14 and this impedes the propagation of the crack 16. This reduction can be: to a value of axial tensile stress below the critical value; to a state of zero axial tensile stress; or to a state of axial compressive stress.

Various modifications and improvements can be made without departing from the scope of the present invention.

## Claims

1. A method of impeding the propagation of a crack (16) in a structure (14) comprising:
providing at least one compression member (40) at the structure (14) at a predetermined distance (50) from the crack (16) such that the structure (14) is in compression such that the stress at the crack (16) is reduced.

2. A method as claimed in Claim 1, wherein the crack (16) is propagating due to stress corrosion cracking.

3. A method as claimed in Claim 1 or 2, wherein the structure is a pipe (14) which is connected to another pipe (12) at a joint (10).

4. A method as claimed in Claim 3, wherein the joint (10) is a butt-welded joint.

5. A method as claimed in Claim 3 or 4, wherein the compression member (40) is provided at the pipe (14) at a predetermined distance (50) from the crack (16) in the axial direction.

6. A method as claimed in any of Claims 3 to 5, wherein the pipe (14) is in radial compression at the compression member (40).

7. A method as claimed in Claim 5, wherein the crack (16) is a radial crack located at or near the internal surface of the pipe (14), and wherein the compression member (40) produces a reduced axial stress at this location.

8. A method as claimed in any preceding claim, comprising attaching two compression members (40) to the structure (14), wherein a compression member (40) is attached to the structure (14) at each side of the crack (16).

9. A method as claimed in any preceding claim, wherein the compression member (40) comprises a band of material.

10. A method as claimed in Claim 9, wherein the band of material comprises a weld material deposited on the structure (14).

11. A method as claimed in any preceding claim, wherein the predetermined distance (50) is dependent upon one or more of the factors of the material of the structure (14), the thickness (51) of the structure (14) and the width (54) of the compression member (40).

12. A method as claimed in any preceding claim, wherein the predetermined distance (50) is determined by performing a stress analysis of the structure (14).

13. A method as claimed in claim 12, wherein the stress analysis is performed using a computer simulation of the structure (14).

14. A method as claimed in Claim 13, wherein the computer simulation comprises the use of Finite Element Analysis.
